# EUROPEAN PATENT SPECIFICATION

(11) **EP 1 703 359 B1**
(45) Date of publication and mention of the grant of the patent: **21.11.2007**
(21) Application number: 05254793.2
(22) Date of filing: 29.07.2005
(51) Int. Cl.: G06F 1/26

(54) **Blade computer with power backup capacitor**
Blade Computer mit Notstromversorgung mittels Kondensatoren
Ordinateur blade avec condesateur d'alimentation de secours

(30) Priority: 18.03.2005 JP 2005078488
(43) Date of publication of application: 20.09.2006
(73) Proprietor: FUJITSU LIMITED, Kawasaki-shi, Kanagawa 211-8588 (JP)
(72) Inventor: Yasuo, Akihiro c/o Fujitsu Limited,, Kawasaki-shi, Kanagawa 211-8588 (JP)
(74) Representative: Fenlon, Christine Lesley

(56) References cited:
- WO-A-03/103359
- US-A- 5 230 056
- US-A- 6 157 979
- US-A1- 2002 049 917
- US-A1- 2003 226 004
- US-A1- 2004 128 562
- US-A1- 2004 255 189
- US-B1- 6 769 033

## Description

The present invention relates to a blade computer for use with a backplane having a plurality of slots, as well as to a blade management device and a computer program for managing such blade computers. More particularly, the present invention relates to a blade computer, a blade management device, and a blade management program that allow service engineers to perform maintenance tasks without stopping operation.

The ever growing need for server applications has led to a trend towards an increased use of large-scale computer systems. Computers for this purpose have to provide greater processing power, but they are not allowed to take up much floor space for installation. One solution that meets those requirements is blade servers.

A blade server system is made up of a plurality of thin computer modules, called "blades," mounted densely in a chassis, such as disclosed in WO 03/103359A. Each blade includes all necessary components for computing, such central processing unit (CPU) and random access memory (RAM), mounted on a single circuit board. Multiple blade computers on a rack share a single power supply subsystem and the like. This space-saving design makes it possible to increase the processing power (or the number of CPUs) per unit floor space significantly.

Blade server systems support hot plugging of blades; i.e., a blade can be added to or removed from the chassis while the system is running. Generally, hot plugging of a unit causes a temporary fluctuation of power supply voltages because their load conditions are suddenly changed. Several researchers propose techniques to suppress voltage fluctuations in such situations. See, for example, Japanese Unexamined Patent Publication No. 2003-316489.

A technical challenge in such blade server systems lies in their maintainability; it is not easy to manage and maintain a large number of blades operating concurrently in a common chassis. Think of, for example, replacing a power supply unit or a cooling fan in the chassis for the purpose of maintenance. Not to disrupt service for clients, all processes running on the blades have to be moved to another chassis before shutting down the current chassis for maintenance. Typically this is achieved by start providing the same services on another set of destination blades that have previously been set up. Every ongoing process of each source blade is discontinued and then resumed on a new destination blade. It is not always allowed, however, to stop server blades all together since they may be serving different clients and thus their maintenance schedules need to be arranged individually. As seen, moving service functions to a new chassis imposes a heavy burden on both clients and administrators.

The difficulty of moving service functions to a new chassis would be solved by using a node migration technique. A node migration process moves ongoing client services from a source blade to a destination blade. Maintenance engineers can thus achieve their tasks without affecting the service being provided to clients. In relation to node migration techniques, Japanese Unexamined Patent Publication No. 2004-246702 discloses a computer system that prevents its data access from being slowed down as a result of node migration of programs.

The process of node migration includes the following steps: (1) preparing as many blades as necessary, (2) setting up a new operating environment with those blades, (3) executing node migration from source blades to destination blades, and (4) extracting old blades from their chassis. As can be seen, the node migration process requires manual intervention to physically handle the blades, meaning that the process is prone to human error. For example, a maintenance engineer may extract a wrong blade from the chassis.

To alleviate the workload of maintenance and management of blade computers, some researchers have developed system virtualization techniques. Specifically, client service is provided, not by a particular set of blades or a particular chassis, but by a necessary number of blades dynamically allocated from among a pool of blades. When more processing power is needed, or when a blade has failed, the blade pool supplies a new blade for compensation. While this virtualization technique facilitates maintenance of blade servers, the physical replacement of components (e.g., chassis, power supplies, fans) still requires human skills. Accidental extraction of blades cannot be avoided.

The problem related to extraction of blades may be solved by adding a battery on each blade. This on-board battery provides power to the circuit when the blade is removed from the backplane, thus allowing the blade to continue the current tasks. Even if the user has extracted a blade by mistake, that event should not disrupt the process being executed on the blade, and he/she is thus allowed to place it back to the chassis without problems. The battery-powered blade design also allows the user to move blades freely from one chassis to another.

Unfortunately existing batteries have a relatively short life; they have to be replaced at regular intervals. This means that server blades with an on-board battery would require regular maintenance. Since servers are supposed to provide high reliability and availability, the blades should not contain such life-limited components.

In view of the foregoing, it is desirable to provide a blade computer that avoids disruption of service even when it is extracted from the chassis, without using life-limited components like batteries. The present invention provides a blade management device and a blade management program for managing such blade computers as follows:

A first aspect of the present invention provides a blade computer for use in one of a plurality of slots of a backplane, the blade computer comprising: a central processing unit; characterised by a capacitor connected to a power line conveying power from the backplane, the CPU operating with power supplied from at least one of the power line and the capacitor; and a radio communications circuit that permits the CPU to communicate with other devices through a wireless channel, wherein the CPU is operable to execute a node migration process using the wireless channel upon request from a remotely located blade management device.

A second aspect of the present invention provides a blade management device for managing blade computers, according to the first aspect of the present invention, installed in a plurality of slots of a backplane, the blade management device being characterised by: a radio communications circuit for communicating with the blade computers through a wireless channel; an insert signal detection circuit that asserts an interrupt signal when it is detected that one of the blade computers has been extracted from a corresponding slot of the backplane; and a central processing unit that measures time elapsed since the assertion of the interrupt signal by the insert signal detection circuit, and executes a node migration process using the wireless channel to transport tasks running on the extracted blade computer to a temporary blade computer if the extracted blade computer remains dismounted until the elapsed time exceeds a predetermined reinsertion timeout period, wherein the temporary blade computer is previously designated from among the plurality of blade computers installed on the backplane.

The radio communications circuit allows the CPU to communicate with the blade computers through a wireless channel. When it is detected that one of the blade computers has been extracted from its corresponding slot of the backplane, the insert signal detection circuit asserts an interrupt signal. Then the CPU measures time elapsed since the assertion of the interrupt signal by the insert signal detection circuit. If the extracted blade computer remains dismounted until the elapsed time exceeds a predetermined reinsertion timeout period, the CPU executes a node migration process using the wireless channel to transport tasks running on the extracted blade computer to a temporary blade computer which is previously designated from among the plurality of blade computers installed on the backplane.

Further aspects of the invention comprise computer programs which, when loaded into or run on a computer, cause the computer to become apparatus according to the aspects described above.

One embodiment of a third aspect of the invention provides a computer-readable storage medium storing a blade management program for managing blade computers installed in a plurality of slots of a backplane, the blade management program causing a computer to function as: a timer that that measures time elapsed since extraction of one of the blade computers from a corresponding slot of the backplane; a blade status manager that checks whether the extracted blade computer is inserted again to one of the slots of the backplane before the elapsed time exceeds a predetermined reinsertion timeout period; and a node migration controller that executes a node migration process using a wireless channel to transport tasks running on the extracted blade computer to a temporary blade computer when the blade status manager has detected expiration of the reinsertion timeout period, wherein the temporary blade computer is previously designated from among the plurality of blade computers installed on the backplane.

The above and other features and advantages of the present invention will become apparent from the following description when taken in conjunction with the accompanying drawings which illustrate preferred embodiments of the present invention by way of example, in which:
FIG. 1 is a block diagram of a blade computer which does not embody the present invention but is useful for understanding it;
FIG. 2 shows the internal structure of an extraction detection circuit;
FIG. 3 is a block diagram of a blade computer which does not embody the present invention but is useful for understanding it;
FIG. 4 is a graph showing an example of how power consumption varies over time in a blade computer;
FIG. 5 shows a blade which does not embody the present invention but is useful for understanding it;
FIG. 6 is a flowchart of a process controlling the operating frequency of a CPU;
FIG. 7 shows an example of a blade server system according to an embodiment of the present invention;
FIG. 8 is a block diagram of a server blade according to the embodiment;
FIG. 9 is a block diagram of a management blade according to an embodiment of the invention;
FIG. 10 is a block diagram showing processing functions that the CPU in the management blade provides according to an embodiment of the invention;
FIG. 11 shows a blade server in operation according to an embodiment of the invention;
FIG. 12 shows how the blade server system behaves when a server blade is extracted according to an embodiment of the present invention;
FIG. 13 shows how the blade server system behaves when the server blade is reinserted according to an embodiment of the present invention;
FIG. 14 is a flowchart of an initialization process according to an embodiment of the present invention;
FIG. 15 is a flowchart of an extraction event handling process according to an embodiment of the invention; and
FIG. 16 is a flowchart of an insertion event handling process according to an embodiment of the invention.

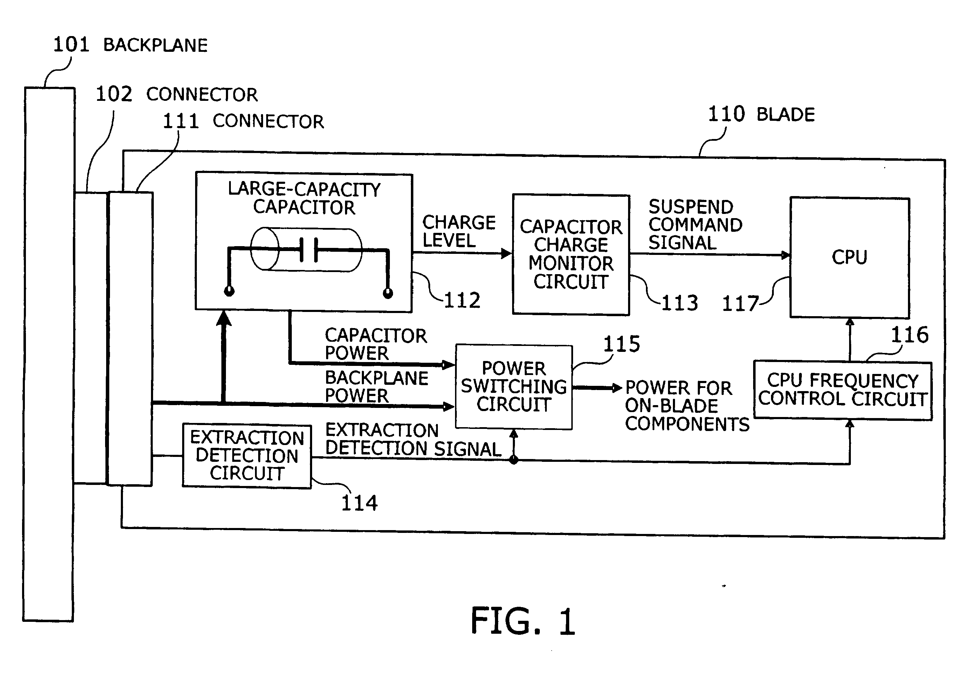

FIG. 1 is a block diagram of a blade computer which does not embody the present invention, but is useful for understanding it. This blade computer (or simply "blade") 110 is connected to a backplane 101 of a chassis (not shown). More specifically, a connector 111 on the blade 110 engages its mating connector 102 on the backplane 101, which establishes electrical connection between the blade 110 and backplane bus (not shown) through their connector contacts.

The blade 110 has a large-capacity capacitor 112 as one of its on-board components. This large-capacity capacitor 112 is supplied with power from the backplane 101 through the connector 111, the electric charge on which is provided to the power switching circuit 115.

Also connected to the large-capacity capacitor 112 is a capacitor charge monitor circuit 113, which monitors the electric charge on the large-capacity capacitor 112 by measuring the voltage between its terminals. When the capacitor charge falls below a predetermined threshold, the capacitor charge monitor circuit 113 asserts a suspend command signal to the CPU 117 on the blade 110.

There is a signal line from the connector 111 to an extraction detection circuit 114. The extraction detection circuit 114 detects whether the connector 111 currently mates with its counterpart on the backplane 101, a connector 102. In other words, the extraction detection circuit 114 checks whether the blade 110 is installed in the blade server chassis. Upon detection of demating of those connectors 111 and 102 (which means extraction of the blade 110 out of the chassis), the extraction detection circuit 114 sends an extraction detection signal to both the power switching circuit 115 and CPU frequency control circuit 116.

The power switching circuit 115 selects either the power supplied from the backplane 101 or that from the large-capacity capacitor 112 for use in every circuit on the blade 110. This power source selection is made depending on the state of a given extraction detection signal. Specifically, the power switching circuit 115 selects the backplane power when the extraction detection signal is inactive. It selects the capacitor power when the extraction detection signal is active.

The CPU frequency control circuit 116 controls the operating frequency of the CPU 117. More specifically, the CPU frequency control circuit 116 sets the operating frequency to its predetermined maximum limit when the extraction detection signal from the extraction detection circuit 114 is inactive. It reduces the CPU frequency when the extraction detection signal is activated.

The CPU 117 operates at the frequency determined by the CPU frequency control circuit 116. The CPU 117 sends the blade system into a suspend state when the capacitor charge monitor circuit 113 asserts its suspend command signal output. This transition to suspend state involves a task of saving data from volatile memory to a non-volatile storage medium before shutting the power down, so that the blade 110 will be able to resume the suspended operation later with the saved data.

With the functional elements described above, the blade 110 operates as follows. When the blade 110 is inserted to a slot of the backplane 101, the power switching circuit 115 selects backplane power to energize the blade 110 since the extraction detection signal from the extraction detection circuit 114 is inactive. Accordingly the large-capacity capacitor 112 is charged up with the power supplied from the backplane 101. The capacitor charge monitor circuit 113 soon finds the capacitor charge above the specified charge level, thus keeping the suspend command signal inactive. Since the extraction detection signal is not asserted, the CPU frequency control circuit 116 sets the CPU frequency to the maximum. The CPU 117 is allowed to process data at the maximum operating frequency, with the power supplied via the backplane 101.

Suppose now that the blade 110 is extracted from the backplane 101. This event is detected by the extraction detection circuit 114, causing an extraction detection signal to be sent to the power switching circuit 115 and CPU frequency control circuit 116. The asserted extraction detection signal triggers the power switching circuit 115 to change the selection so that the blade 110 will be powered from the large-capacity capacitor 112. The CPU frequency control circuit 116 reduces the operating frequency of the CPU 117. As a result, the CPU 117 begins to operate at a lower frequency than its maximum limit, supplied with the power charged in the large-capacity capacitor 112.

The amount of electrical energy charged in the large-capacity capacitor 112 is sufficient for the blade 110 to continue processing data for a certain period after the extraction event. The CPU 117 constantly consumes the capacitor charge, and when it falls below a predetermined threshold, the capacitor charge monitor circuit 113 asserts a suspend command signal to the CPU 117. Upon receipt of this suspend command signal, the CPU 117 performs a process to bring the blade 110 into suspend mode, so as to stop further consumption of power in the blade 110.

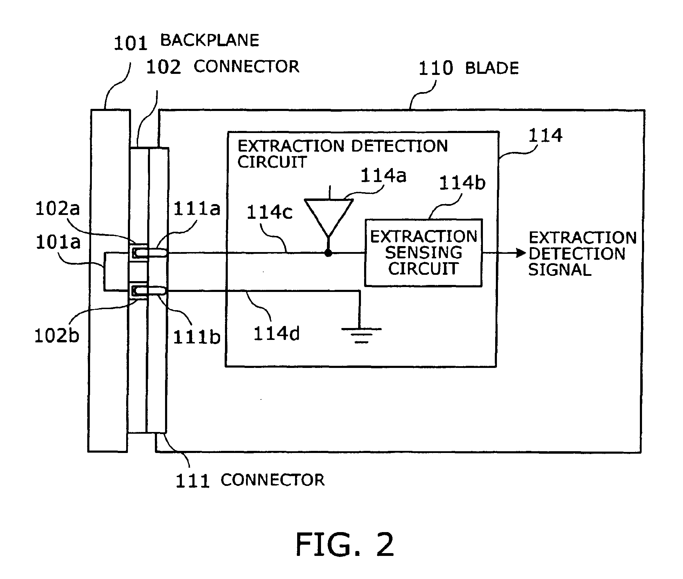

Referring to FIG. 2, the detailed internal structure of the extraction detection circuit 114 will be described below. The extraction detection circuit 114 has a sense line 114c to detect a connection or disconnection of the blade 110 to/from the backplane 101. A predetermined voltage is applied to this sense line 114c through a driver circuit 114a. On the blade 110, the sense line 114c is routed from a pin contact 111a of the connector 111 to the extraction sensing circuit 114b.

The extraction sensing circuit 114b asserts or negates an extraction detection signal, depending on its input voltage given through the sense line 114c. Specifically, it asserts the extraction detection signal when the sense line voltage is high, and negates the signal when it is low. The sense line 114c on the blade 110 extends from the extraction detection circuit 114 to the backplane 101 through a socket contact 102a mating with the pin contact 111a of the connector 111. On the backplane 101, a jumper line 101a runs from this socket contact 102a to another socket contact 102b, whose mating pin contact 111b is grounded in the extraction detection circuit 114 through a ground line 114d.

The output of the driver circuit 114a therefore is short-circuited to ground via the sense line 114c, jumper line 101a, and ground line 114d when the blade 110 is mounted on the backplane 101. The resulting low-level input signal keeps the extraction sensing circuit 114b from activating the extraction detection signal. If the blade 110 is pulled out of the backplane 101, the consequent removal of the circuit between two pin contacts 111a and 111b of the connector 111 causes the extraction sensing circuit 114b to sense a high-level voltage of the driver circuit 114a. The extraction sensing circuit 114b now outputs an active extraction detection signal, signifying that extraction of the blade 110 is detected.

As can be seen from FIGS. 1 and 2, the large-capacity capacitor 112 serves as a temporary power source when the blade 110 is off the chassis, allowing the CPU 117 on the blade 110 to continue its operation. This feature enables maintenance engineers to move blades from one chassis to another chassis without stopping their operation, in case the original chassis needs repair. Unlike batteries, the large-capacity capacitor 112 has a much longer (practically unlimited) lifetime, thus eliminating the need for scheduled maintenance. The blade server design with power backup capacitors satisfies both the maintainability and reliability requirements.

The operating frequency of the CPU 117 goes down in the event of blade extraction, which would contribute to longer operation of the CPU 117 with capacitor power. Further, the capacitor charge monitor circuit 113 watches the remaining energy in the large-capacity capacitor 112, so that the blade 110 can bring itself into a suspend state before it uses up the capacitor charge. This suspend mechanism prevents the data from being lost as a result of exhaustion of capacitor power.

Another blade will now be described which differs in that a blade produces an audible alarm if it is extracted mistakenly.

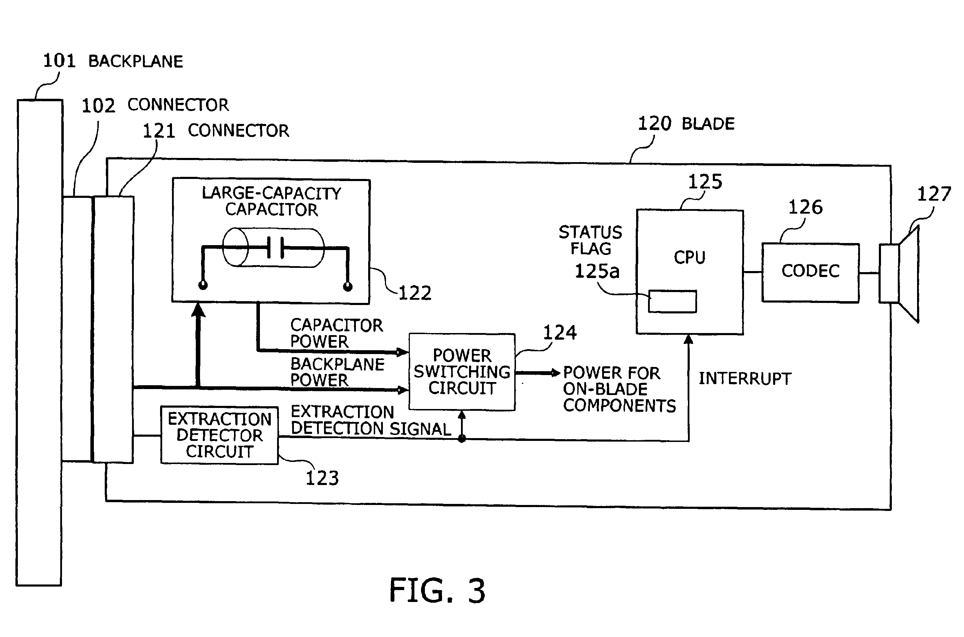

FIG. 3 is a block diagram of a blade 120 which does not embody the present invention. The illustrated blade 120 has, among others, the following elements: a connector 121, a large-capacity capacitor 122, an extraction detection circuit 123, a power switching circuit 124, a CPU 125, a coder/decoder (CODEC) 126, and a loudspeaker 127. The connector 121, large-capacity capacitor 122, extraction detection circuit 123, and power switching circuit 124 have the same functions as their respective counterparts in FIG. 1. The following section will therefore focus on the distinct functional elements of the FIG. 3 blade, other than those that have already been explained.

The extraction detection signal asserted by the extraction detection circuit 123 acts as an interrupt request signal to the CPU 125. Also, the CPU 125 has a status flag 125a to indicate the system's operating status, particularly as to whether the operating system (OS) is running or not. More specifically, the status flag 125a is set to a value indicating the "running" state of the CPU 125 when the operating system is functioning. The status flag 125a is set to another value indicating the "stopped" state of the CPU 125 when the operating system is shut down. The status flag 125a may be implemented by using the whole or part of a general-purpose register in the CPU 125.

Even when the operating system is not running, the CPU 125 is still allowed to operate with some programs on a read-only memory (ROM, not shown). When interrupted by the extraction detection circuit 123 through its extraction detection signal output, the first thing the CPU 125 should do is to check the status flag 125a. If it indicates a "running" status of the operating system, the CPU 125 sends an alarm output signal to the codec 126. This signal causes the CODEC 126 to produce an audible alarm with a loudspeaker 127.

The blade 120 is supposed to stay in the chassis when the operating system is running. In other words, it should not be pulled out of the chassis unless the operating system is stopped. According to the above-described configuration of the blade 120, the CPU 125 maintains a status flag 125a to indicate whether the blade 120 can be extracted now (i.e., whether the operating system has been shut down). With the electric charge on its large-capacity capacitor 122, the blade 120 can continue to run even if it is extracted accidentally from the backplane 101. The extraction detection circuit 123 detects such an extraction event and notifies the CPU 125 of that event by asserting an extraction detection signal to raise an interrupt request. In response to this interrupt signal, the CPU 125 consults the status flag 125a to check the current operating status. If it indicates a "running" state, the CPU 125 sends an alarm output signal to cause the CODEC 126 to produce an alarm sound through the loudspeaker 127.

As can be seen from the above, the status flag 125a permits the CPU 125 to warn the user at the moment if he/she has extracted the blade 120 while it is operating, thereby prompting him/her to reinsert the blade 120 back to the chassis. This feature of the second embodiment helps maintenance engineers replace a blade without errors. That is, if an engineer happens to pull out a blade mistakenly, that blade will generate an audible alarm immediately to indicate that he/she has extracted a wrong blade. The engineer then reinserts the blade back to its original position of the backplane 101, and there will be no loss of data since the blade 120 is powered by the large-capacity capacitor 122 for the duration. In this way the FIG. 3 blade prevents data on a blade from being lost due to accidental extraction of that blade.

While the example of FIG. 3 uses sound to alert the user, the present invention should not be limited to that particular implementation. As an alternative method, the blade may be designed to light an alarm LED to indicate improper extraction.

This section describes another blade, which employs a large-capacity capacitor in order to reduce the power rating of a blade server (in other words, to enable the use of a smaller power supply unit). Specifically, the blade uses electric charge on a large-capacity capacitor to fight against an instantaneous voltage drop due a temporary surge of power consumed by the blade system.

The concept of this blade is based on the following fact: The power consumption of a blade varies over time, depending on what the computer is currently doing. The power supply of a blade server is selected usually on the basis of a peak power demand of the system, in spite of the fact that the system would not stay at that peak condition for a long time. This previously considered design approach often results in an unnecessarily large power supply capacity for the blades, which leads to a poor cost-performance ratio. By contrast, this blade computer has a large-capacity capacitor as a power source to cope with a temporary increase in power consumption, so that the designer can assume a less-than-peak power consumption of blades when selecting a power supply for the chassis. This feature contributes to a cost reduction of blade servers since it avoids the use of an overdesigned power supply for their chassis.

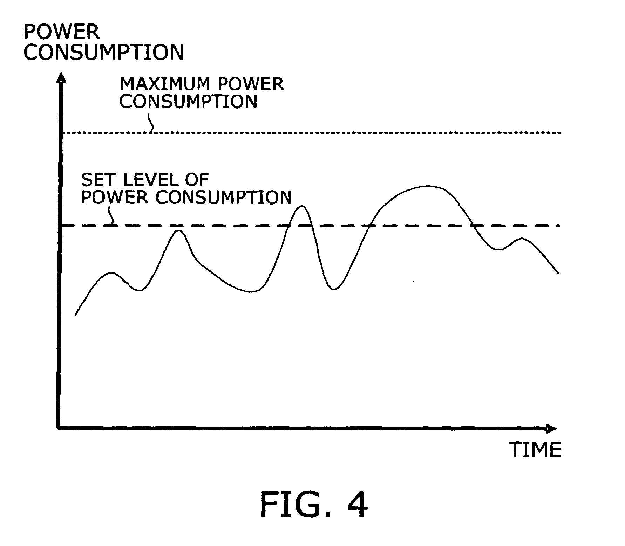

FIG. 4 is a graph showing an example of how the power consumption (vertical axis) varies over time (horizontal axis). The solid curve in this graph indicates the power consumption varying over time, the dotted line the maximum power consumption, and the broken line a set level of power consumption. Although the blade sometimes consumes more than a set level as shown in FIG. 4, the large-capacity capacitor readily supplies the blade with additional power. For this reason, it is not necessary for the power supply of the blade server to provide each server with its maximum power. The power supply is allowed to assume the set level of power consumption for each blade.

The capacitor, however, cannot drive the blade circuit forever because of its limited capacity. Thus this blade provides a mechanism of reducing power consumption of the blade before the capacitor charge is exhausted. This is accomplished by monitoring the current charge level of the large-capacity capacitor and reducing the operating frequency of CPU when the capacitor charge falls below a predetermined threshold. The capacitor-assisted operating time of the blade will be effectively extended because a lower operating frequency means a lower power consumption.

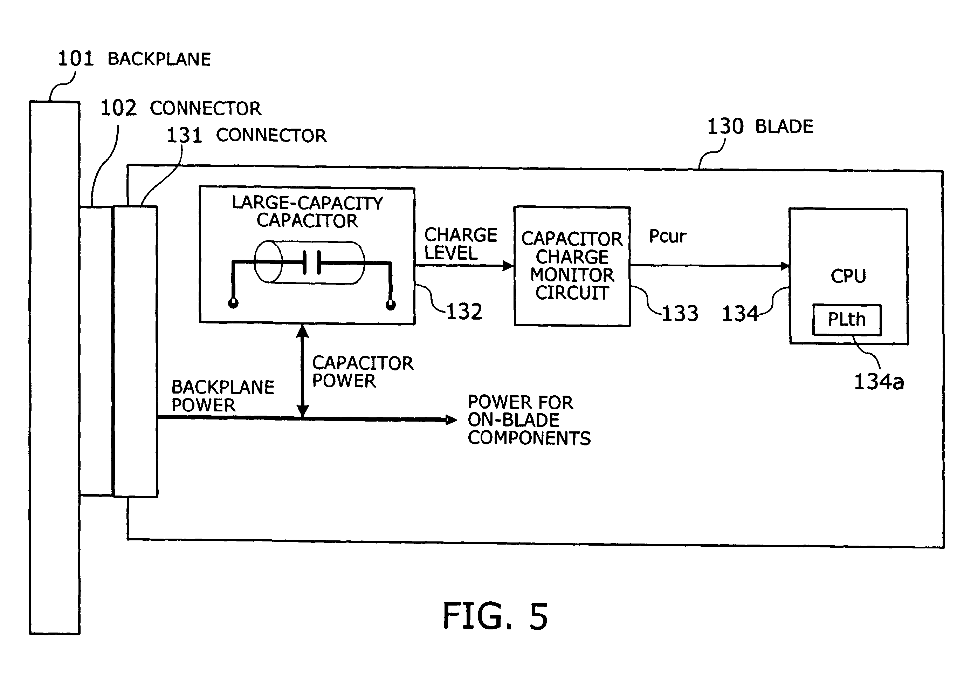

FIG. 5 shows a blade 130 which does not embody the present invention. This blade 130 operates usually with the power supplied from the backplane 101 via a connector 131, together with a large-capacity capacitor 132 placed on that power line. The large-capacity capacitor 132 is charged during the period when the actual power consumption of the blade 130 is smaller than the backplane power capacity. When the blade 130 needs more power than the backplane 101 can supply, the large-capacity capacitor 132 provides its stored energy to the blade circuits.

The current charge of the large-capacity capacitor 132 is monitored by the capacitor charge monitor circuit 133, and the CPU 134 can read it as capacitor charge level (Pcur). The CPU 134 compares the capacitor charge level (Pcur) received from the capacitor charge monitor circuit 133 with a predetermined lower charge threshold (PLth) that is set in threshold data 134a for use in determining whether to change the operating frequency of the CPU 134. If Pcur falls below PLth, the CPU 134 reduces its own operating frequency. The new frequency is lower than the nominal operating frequency, i.e., the highest frequency within a range specified as the recommended operating conditions of the CPU 134. When the capacitor charge level Pcur has recovered to the lower charge threshold PLth or more, the CPU 134 changes its operating frequency back to the nominal frequency.

In operation, the blade 130 is powered from the backplane 101 as long as its current power consumption is within the range of the power that the backplane 101 can supply. For the duration, the large-capacity capacitor 132 is charged up with the backplane power. The power consumption of the blade 130 may later show an increase exceeding the capacity of backplane power, in which case the charge on the large-capacity capacitor 132 will keep the circuits on the blade 130 working. The capacitor charge monitor circuit 133 watches the voltage of the large-capacity capacitor 132, thus informing the CPU 134 of the current capacitor charge level (Pcur). The CPU 134 operates at its nominal frequency when Pcur is not lower than the lower charge threshold, PLth. A drop of Pcur below PLth will cause the CPU 134 to decrease its own operating frequency.

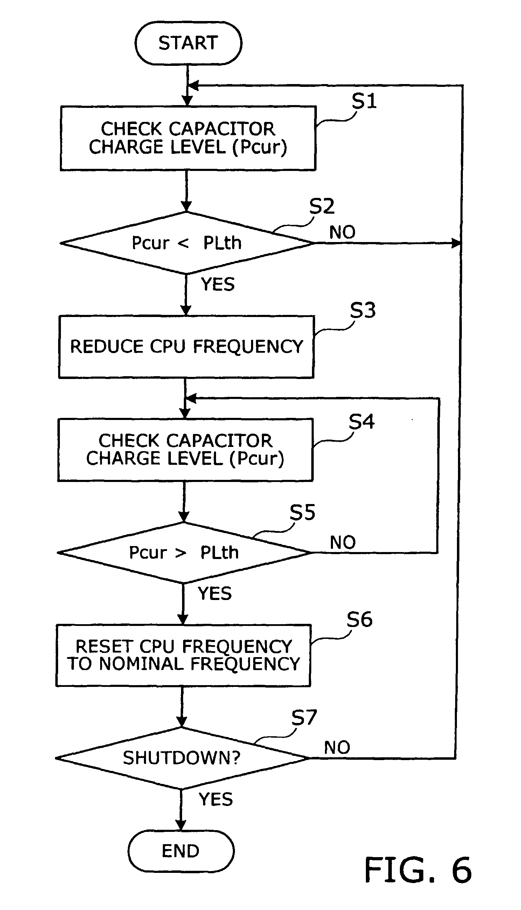

FIG. 6 is a flowchart of a process controlling the operating frequency of CPU. This process includes the following steps:
(Step S1) The CPU 134 checks the current capacitor charge level (Pcur) monitored by the capacitor charge monitor circuit 133.
(Step S2) The CPU 134 determines whether Pcur is lower than a predetermined lower charge threshold (PLth). If so, the process advances to step S3. If not, the process goes back to step S1 to repeat checking Pcur.
(Step S3) The CPU 134 reduces its operating frequency down to a predetermined frequency for power-saving mode.
(Step S4) The CPU 134 checks the current capacitor charge level (Pcur).
(Step S5) The CPU 134 determines whether Pcur is higher than PLth (i.e., whether the capacitor charge has recovered). If so, the process advances to step S6. If not, the process goes back to step S4 to repeat checking Pcur.
(Step S6) The CPU 134 resets its operating frequency to the nominal frequency.
(Step S7) The CPU 134 determines whether it is in the process of shutdown. If not, the process returns to step S1. If so, this frequency control process is terminated.

As can be seen from the above, the blade 130 is designed to vary the operating frequency of its CPU 134, depending on the amount of charge in the large-capacity capacitor 132. The large-capacity capacitor 132 is charged up in normal operating conditions, and the stored energy is used as a supplementary power source to provide the blade 130 with sufficient power for its peak demand exceeding a predetermined threshold. This feature of the third embodiment is made possible by using not a secondary (rechargeable) battery but a large-capacity capacitor 132. Secondary batteries need a relatively long charge time. Once discharged, they cannot recover the charge quickly enough to become ready for a next peak power demand. By contrast, large-capacity capacitors, can be charged instantly and thus effective in dealing with frequent changes of power consumption.

Blade 130 is also prepared for a burst of excessive power consumption. That is, the capacitor charge is monitored to reduce the CPU operating frequency before exhaustion of the remaining charge. The power consumption will decrease accordingly, thus preventing the system from being suddenly shut down due to the loss of power.

### Embodiment

This section describes an embodiment of the present invention. The embodiment enables node migration (i.e., transporting ongoing tasks of an extracted blade to another blade) using wireless communication techniques. The foregoing examples are unable to prevent client services from being disrupted due to long-lasting detachment of blades, although they work well for short-period blade detachment. To address this shortcoming, the present invention employs a large-capacity capacitor and a wireless LAN module using, for example, ultra wideband (UWB) technology, so as to execute a node migration process without the need for reinserting the blade.

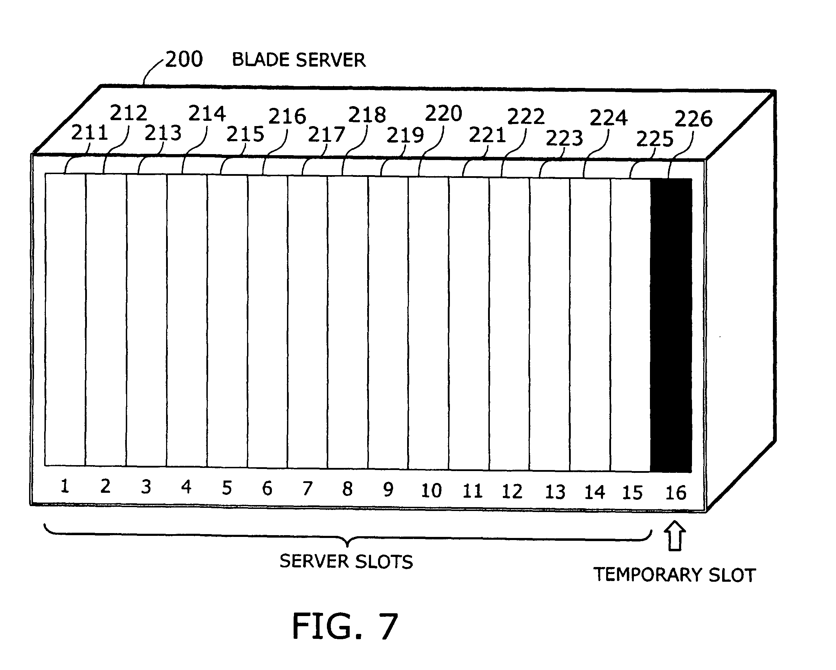

FIG. 7 shows an example of a blade server system embodying the present invention. The illustrated blade server 200 has a plurality of server slots 211 to 225 for client services and one temporary slot 226 for migration purposes. While not shown in FIG. 7, a management slot is disposed on the opposite side to those server slots 211 to 225 and temporary slot 226. The server slots 211 to 225 accommodate server blades serving requests from clients, whereas the temporary slot 226 houses a spare server blade for use in a node migration process that transports functions of a specified server blade. The management slot (not shown) is for a management blade that controls the entire blade server 200.

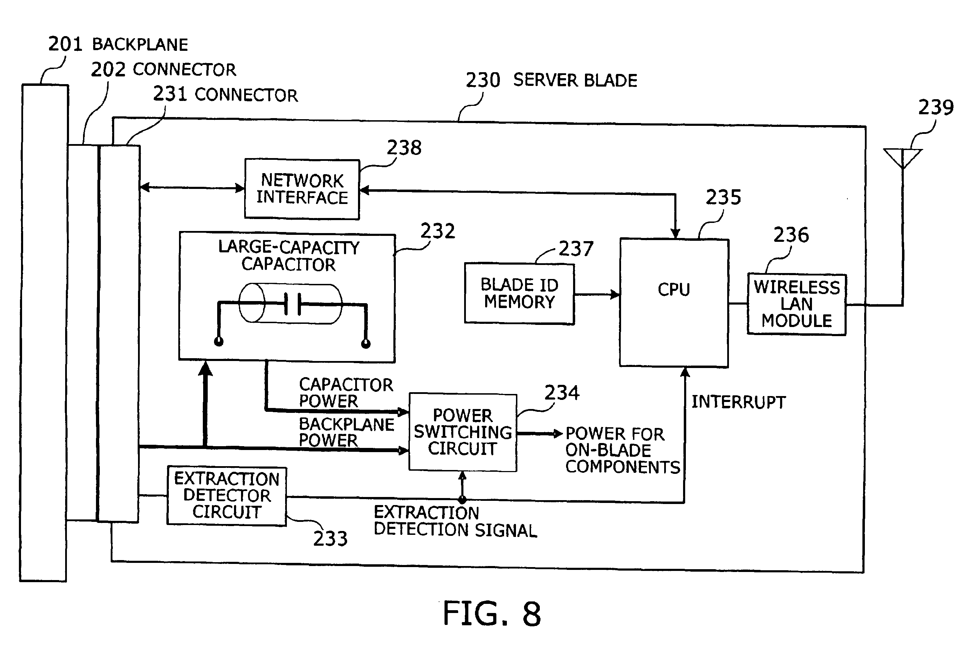

FIG. 8 is a block diagram of a server blade 230 embodying the present invention. Of all elements of the illustrated server blade 230, the connector 231, large-capacity capacitor 232, extraction detection circuit 233, and power switching circuit 234 have the same functions as their respective counterparts in the example explained in FIG. 1. The following section will therefore focus on the distinct functional elements of the embodiment, other than those that have already been explained.

According to the present invention, the extraction detection signal asserted by the extraction detection circuit 233 works as an interrupt request signal to the CPU 235. Upon receipt of an interrupt signal, the CPU 235 triggers a timer (not shown) to wait until a predetermined time has elapsed. When the time is reached, the CPU 235 starts a node migration process using a wireless LAN module 236.

The CPU 235 is allowed to communicate with the management blade via the wireless LAN module 236 and its antenna 239. The CPU 235 is coupled to a blade ID memory 237, which stores an identifier of the server blade 230 to distinguish itself from others within the blade server 200. Also connected to the CPU 235 is a network interface 238, which permits the CPU 235 to communicate with other blades in the blade server 200. For this purpose, the network interfaces on all blades are connected together on the backplane 201.

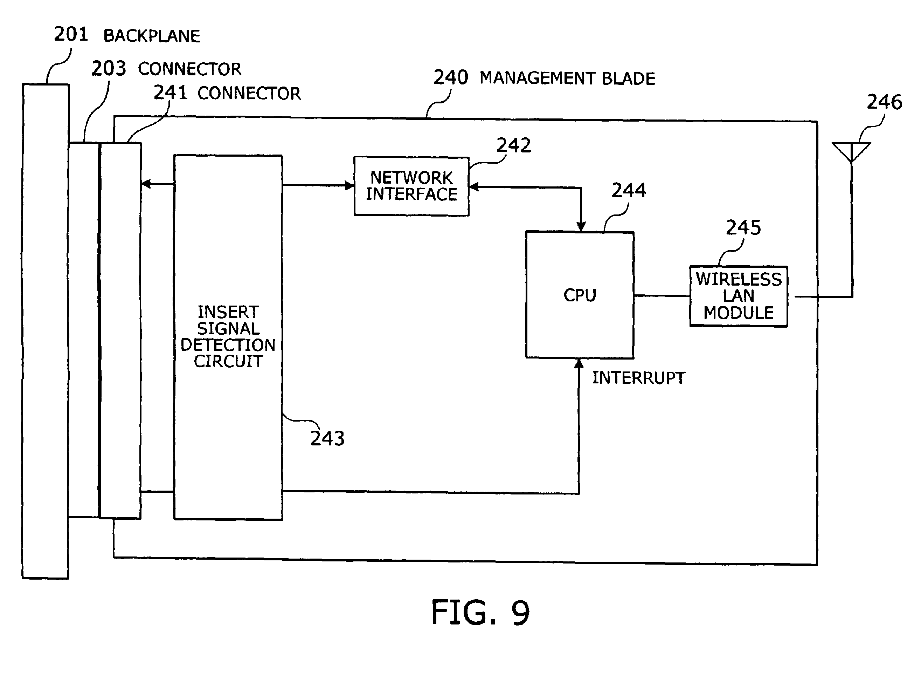

FIG. 9 is a block diagram of the management blade 240. The management blade 240 has a connector 241 to mate with a management slot connector 203 on the backplane 201. A network interface 242 is connected to this connector 241 via an insert signal detection circuit 243. The network interface 242 permits the CPU 244 to communicate with other blades via the backplane bus (not shown).

Via the bus on the backplane 201, the insert signal detection circuit 243 detects the presence of a blade in each slot. When a server blade is inserted to a slot, or when an existing blade is extracted from its slot, the insert signal detection circuit 243 informs the CPU 244 of that event by sending an interrupt signal. Here the CPU 244 receives a piece of information indicating whether the blade has been inserted or extracted, as well as which slot that is. Upon receipt of the interrupt, along with slot number information provided via the network interface 242, the CPU 244 recognizes which server blade has been attached or removed. In the case of extraction, the CPU 244 triggers a reinsertion wait timer (not shown), and if the extracted server blade remains dismounted for a predetermined period set in the timer, the CPU 244 initiates node migration of that server blade. The node migration process uses the radio communication function of a wireless LAN module 245 coupled to the CPU 244. The wireless LAN module 245 and antenna 246 allow the CPU 244 to communicate with other server blades.

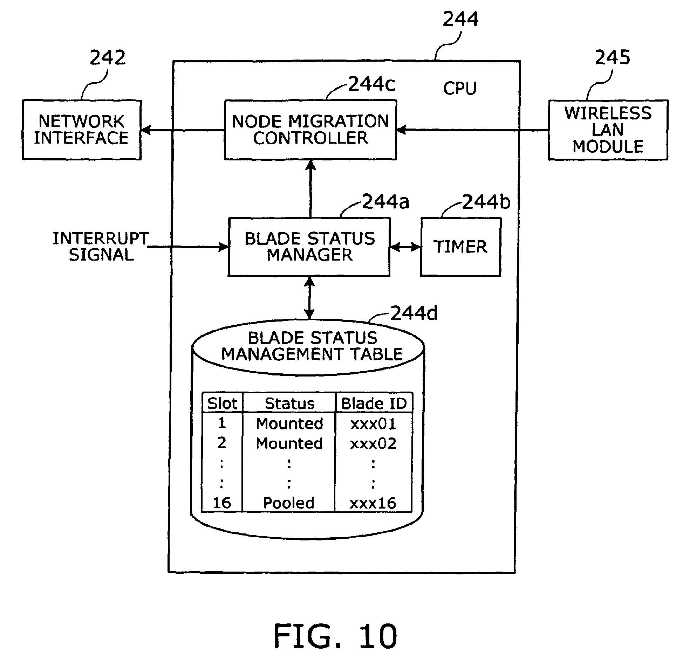

FIG. 10 is a block diagram showing processing functions that the CPU 244 in the management blade 240 offers. The functions include: a blade status manager 244a, a timer 244b, a node migration controller 244c, and a blade status management table 244d. The blade status manager 244a manages the status of each server blade with reference to a blade status management table 244d, while detecting extraction and insertion of a blade according to interrupt signals from the insert signal detection circuit 243. When a working blade server is extracted from the backplane 201, the blade status manager 244a activates the timer 244b. The timer 244b then keeps counting accordingly, until a predetermined time is elapsed. If the blade status manager 244a does not detect reinsertion of that blade to some slot before the timer 244b expires, then it requests the node migration controller 244c to start a node migration process.

In response to a node migration request from the blade status manager 244a, the node migration controller 244c transports ongoing tasks on the extracted server blade to another server blade that is mounted in the temporary slot 226. Specifically, the node migration controller 244c makes access to memory data in the extracted server blade by using the wireless LAN module 245. Then through the network interface 242, the node migration controller 244c transfers that data to the server blade in the temporary slot 226. Upon completion of this data transfer, the node migration controller 244c sends a startup command to the server blade in the temporary slot 226.

The blade status management table 244d mentioned above is a data table for managing the status of server blade in each slot, which is located in an internal memory of the CPU 244 or an external memory under the control of the CPU 244. This blade status management table 244d has the following data fields: "Slot," "Status," and "Blade ID." Each row of the table 244d (i.e., each set of associated data fields) constitutes a single record representing the status information concerning each particular slot and its blade.

The slot field contains the identifier of a slot, and the status field shows the status of the server blade installed in that slot. The status field may take a property value of "Mounted," "Pooled," "Dismounted," "Temporary," or "Not Assigned." "Mounted" means that a server blade is operating in the slot. "Pooled" means that the slot holds a spare server blade. "Dismounted" indicates that a once existent server blade has been extracted from the slot. "Temporary" means that the server blade in the slot is only for temporary service. "Not Assigned" indicates that no server blade is assigned to the slot.

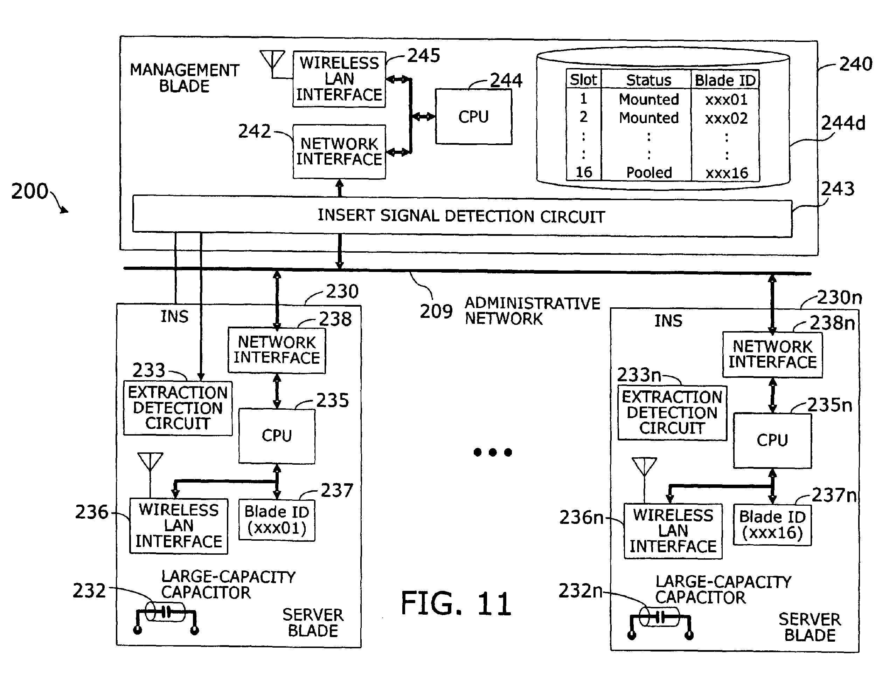

The above-described blade server 200 will operate as follows. FIG. 11 shows a situation where the blade server 200 is operating with a management blade 240 and a plurality of server blades 230 to 230n. Those blades are linked with each other as nodes on an administrative network 209. As explained in FIG. 7, the blade server 200 has sixteen slots, #1 to #15 for user service and #16 for temporary purposes. The server blade 230 in slot #1 is serving clients, while the server blade 230n is placed in slot #16 for temporary use.

The large-capacity capacitor 232n in the temporary server blade 230n functions in the same way as its counterpart in the first server blade 230. This is also true of the other elements including: the extraction detection circuit 233n, CPU 235n, wireless LAN interface 236n, blade ID memory 237n, and network interface 238n. The exception is that the blade ID memory 237 in the server blade 230 stores a blade ID of "xxx01," whereas the blade ID memory 237n in the temporary server blade 230n stores "xxx16."

The administrative network 209 is a network disposed on the backplane 201, independently of the network for client services, for the purpose of system management. The management blade 240 uses this administrative network 209 to configure and supervise the server blades 230 to 230n.

When the user has pulled a server blade out of its slot ungracefully (without shutting down its operating system), the management blade 240 detects the event and changes the status of that slot to "Dismounted." If the user inserts the blade to another slot in a predetermined period (during which a reliable capacitor-powered operation is ensured), the management blade 240 renders the original slot to "Not Assigned" and the new slot to "Mounted." If, on the other hand, the extracted server blade remains unmounted for the same predetermined period, the management blade 240 receives node migration data from that blade over a wireless LAN channel and transfers it to a temporary blade, so that the temporary server blade can take over the ongoing tasks from the extracted blade.

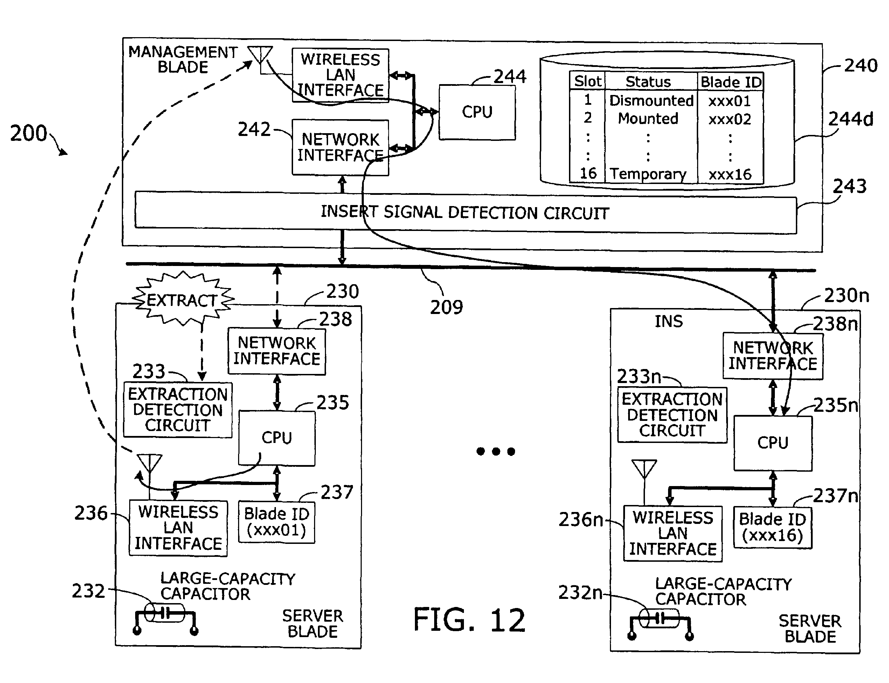

FIG. 12 shows how the blade server 200 behaves when its server blade 230 is pulled out. As can be seen, the extraction of the server blade 230 causes an update of the blade status management table 244d. Specifically, the status of slot #1 is changed from "Mounted" to "Dismounted." Upon expiration of a predetermined waiting period, the management blade 240 initiates node migration from the extracted server blade 230 to a temporary server blade 230n. Now that the extracted server blade 230 has lost its physical connection to the administrative network 209, the process data for migration is transmitted to the management blade 240 over the wireless LAN. The management blade 240 forwards the data to the temporary server blade 230n via the administrative network 209. The received data permits the temporary server blade 230n to set up the same processing environment as the one in the server blade 230, so that the temporary server blade 230n can take over the client services from the original server blade 230.

Suppose now that the server blade 230 is inserted again to a slot after a while. The management blade 240 then reads the blade ID of the inserted server blade 230 through the administrative network 209 and compares it with each blade ID in the records of the blade status management table 244d. If a record with the same blade ID is found in the blade status management table 244d, the management blade 240 initiates a node migration process to transport the tasks running on the temporary server blade 230n back to the reinserted server blade 230. Upon completion of migration, the temporary server blade 230n is released.

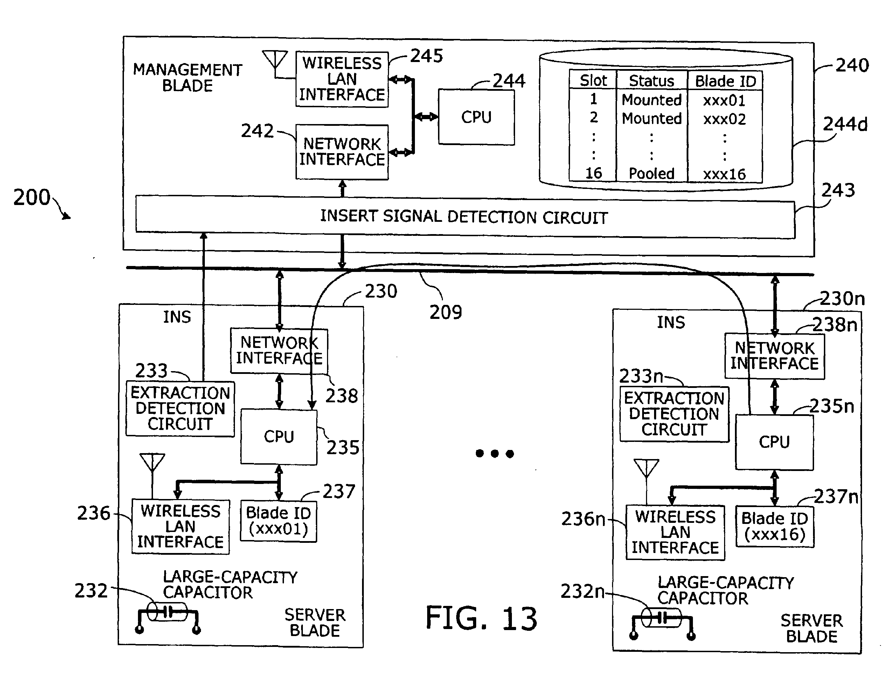

FIG. 13 shows how the blade server 200 behaves when the server blade 230 is reinserted. As can be seen from FIG. 13, the reinsertion event initiates node migration from the temporary server blade 230n to the reinserted server blade 230 under the control of the management blade 240, thus allowing the original server blade 230 to resume its service.

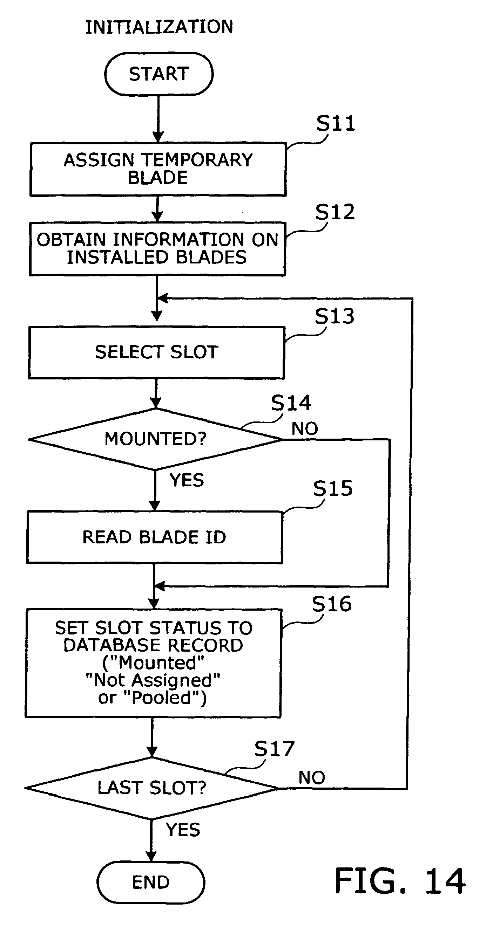

As will be described in detail below with reference to FIGS. 14 to 16, the management blade 240 performs the following three tasks: (1) an initialization process, which is called at the time of system startup, (2) an extraction event handling process, which is initiated when a server blade is extracted, and (3) an insertion event handling process, which is executed when a server blade is inserted.

The initialization process mentioned above takes place when the blade server 200 is powered up. It registers the status of server blades in individual slots with the blade status management table 244d. FIG. 14 is a flowchart of this initialization process, which includes the following steps:
(Step S11) Upon system startup, the blade status manager 244a in the CPU 244 specifies at least one slot for a temporary blade. The decision of which slot to use is based on, for example, several setup parameters previously given in accordance with system management policies. Specifically, those setup parameters allow the blade status manager 244a to determine the number of temporary blades, as well as their slot positions.
(Step S12) The blade status manager 244a makes access to the insert signal detection circuit 243 to obtain information about server blades that are currently installed in the blade server 200.
(Step S13) The blade status manager 244a selects a slot in ascending order of slot number.
(Step S14) The blade status manager 244a examines whether the slot selected at step S13 holds a server blade. If there is a blade in the slot, then the process advances to step S15. If not, the process skips to step S16.
(Step S15) Via the network interface 242, the blade status manager 224a makes access to the server blade in the selected slot to read out its blade ID.
(Step S16) The blade status manager 244a updates the blade status management table 244d with the slot status discovered at steps S13 to S15. More specifically, if a server blade is found in the slot selected at step S13, the blade status manager 244a registers the blade ID of step S15 with the corresponding record in the blade status management table 244d. Further, if that server blade is meant for client service (i.e., if it is not a temporary blade), the blade status manager 244a gives a "Mounted" state to the status field of the corresponding record. Or if it is a temporary blade, the blade status manager 244a sets a "Pooled" state to that field. Or if the step S14 has revealed the absence of a blade in the selected slot, the blade status manager 244a gives a "Not Assigned" state to that field.
(Step S17) The blade status manager 244a determines whether the currently selected slot is the last slot of the chassis. If not, the process returns to step S13. If it is the last slot, the blade status manager 244a exits from this initialization process.

Through the above processing steps, the blade status manager 244a reads setup parameters representing system administration policies and determines therefrom the number of temporary blades and their slot positions. In addition, the blade status manager 244a obtains information about the presence of a server blade in each slot from the insert signal detection circuit 243, thus compiling a blade status management table 244d for use as a database showing the status of every slot.

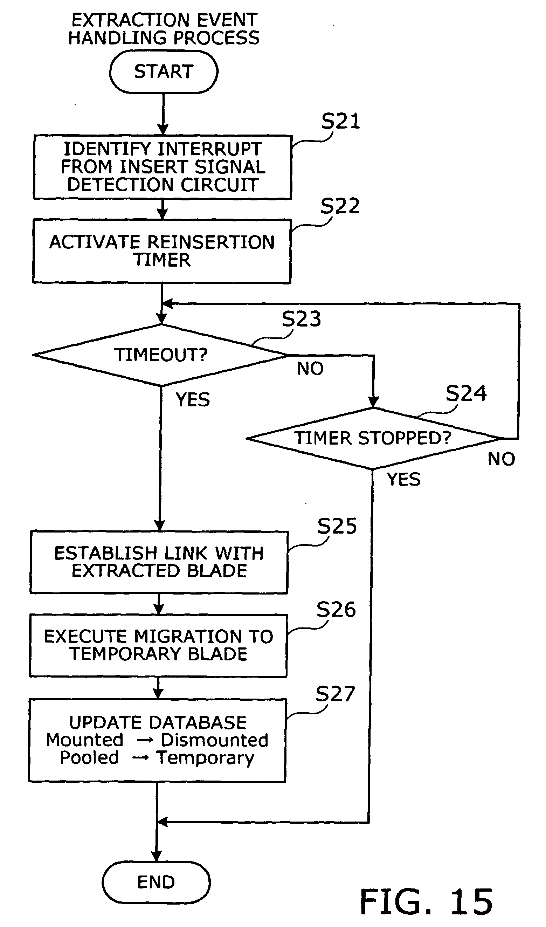

The blade server 200 is brought into operation, with the slot status registered in the blade status management table 244d, together with the blade IDs of installed server blades. Server maintenance takes place as necessary in the course of operations. During maintenance a server blade may be pulled out of the slot, which would cause the CPU 244 to execute an extraction event handling process. FIG. 15 is a flowchart of this extraction event handling process. Specifically, this process is initiated in response to an interrupt signal that the insert signal detection circuit 243 generates when it detects extraction of one of the server blades in the blade server 200. The process includes the following steps:
(Step S21) The blade status manager 244a identifies an interrupt signal from the insert signal detection circuit 243.
(Step S22) The blade status manager 244a activates a timer 244b to see whether a blade insertion event will occur in a predetermined reinsertion timeout period.
(Step S23) The blade status manager 244a checks the timer 244b to determine whether the reinsertion timeout period is expired. If so, the process advances to step S25. If not, the process goes to step S24.
(Step S24) The blade status manager 244a determines whether the timer 244b is stopped as a result of reinsertion of the server blade. If so, the present process is terminated. If the timer 244b is still counting, the process goes back to step S23.
(Step S25) The blade status manager 244a commands the node migration controller 244c to start node migration, specifying the blade ID of the extracted server blade. With the blade ID specified, the node migration controller 244c identifies which server blade is extracted, and it then establishes a wireless link to that server blade via the wireless LAN module 245.
(Step S26) The node migration controller 244c executes node migration to transport the role that the extracted server blade was playing to another server blade located in the temporary slot. When finished, the node migration controller 244c notifies the blade status manager 244a of the completion.
(Step S27) The blade status manager 244a makes access to the blade status management table 244d to update the slot status fields. Specifically, it changes the status of the now-vacant slot from "Mounted" to "Dismounted." It also alters the status of the migration destination slot from "Pooled" to "Temporary."

As can be seen from the above, the management blade 240 is designed such that its insert signal detection circuit 243 will send an interrupt request signal to the local CPU 244 in the case a working server blade is extracted ungracefully (without shutting down the blade). The interrupt informs the blade status manager 244a of the occurrence of an extraction event, thus triggering a reinsertion wait timer. If reinserted before timeout, the blade continues its operation, thus allowing the extraction event handling process to be terminated without further actions. If the timer expires, it means that the server blade would exhaust its capacitor power before long. The blade status manager 244a thus initiates a node migration process to move the tasks on the extracted blade to a temporary blade.

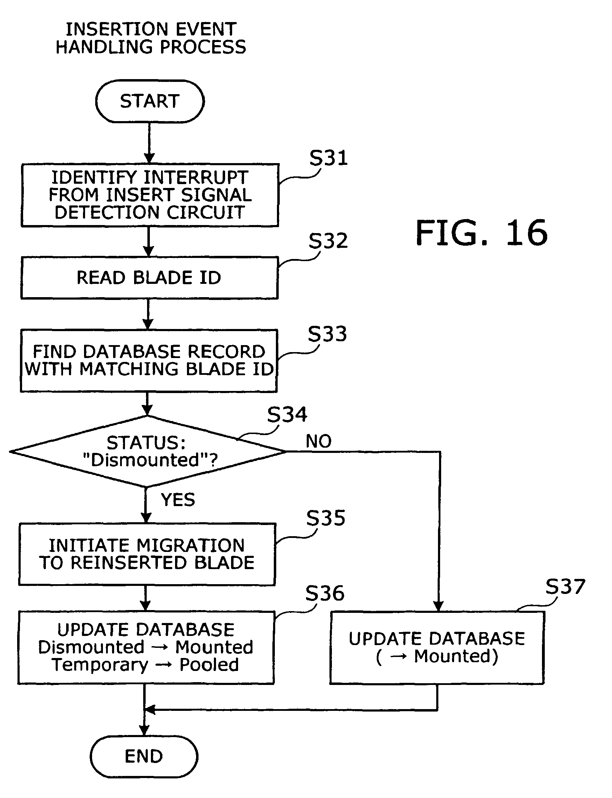

FIG. 16 is a flowchart of an insertion event handling process. Specifically, this process is initiated in response to an insertion interrupt signal that the insert signal detection circuit 243 generates when it detects insertion of a server blade into the blade server 200. The process includes the following steps:
(Step S31) The blade status manager 244a identifies an interrupt signal from the insert signal detection circuit 243.
(Step S32) The blade status manager 244a reads the blade ID out of the inserted server blade.
(Step S33) The blade status manager 244a consults the blade status management table 244d to find a record associated with the blade ID read at step S32.
(Step S34) If a relevant record is found at step S33, then the blade status manager 244a determines whether its slot status field indicates "Dismounted." If so, the blade status manager 244a advances the process to step S35, recognizing that what the inserted server blade is exactly the one that was extracted. Otherwise, the process branches to step S37 since the inserted blade must be a new server blade.
(Step S35) The blade status manager 244a commands the node migration controller 244c to start node migration, specifying the blade ID of the reinserted server blade. The node migration controller 244c executes node migration to transport tasks from the temporary server blade back to the reinserted server blade. When finished, the node migration controller 244c notifies the blade status manager 244a of the completion.
(Step S36) The blade status manager 244a makes access to the blade status management table 244d to update slot status fields. In the case the server blade has returned to its original slot, the blade status manager 244a resets the status from "Dismounted" to "Mounted." In the case the server blade now sits in a different slot, it changes the status of the current slot from "Not Assigned" to "Mounted" and that of the original slot from "Dismounted" to "Not Assigned." Further, in both cases, the blade status manager 244a changes the status of the temporary slot from "Temporary" to "Pooled" before exiting from the present process.
(Step S37) Now that a new blade is identified at step S34, the blade status manager 244a makes access to the blade status management table 244d to update the corresponding slot status field. Specifically, the blade status manager 244a changes the status field value to "Mounted" and registers the blade ID of the new server blade, before exiting from the present process.

An extracted server blade can be inserted back to the same slot or to a different slot. In either case, the insert signal detection circuit raises an interrupt to the CPU 244 on the management blade 240. With the interrupt, the blade status manager 244a scans the blade status management table 244d in attempt to find an entry indicating a "Dismounted" status and containing a blade ID that matches with that of the inserted server blade. If such a table entry is found, the blade status manager 244a understands that the inserted server blade in question was once working as part of the blade server 200. This reinsertion event triggers the node migration controller 244c to initiate a node migration process to move client service from the temporary blade back to the reinserted server blade.

As can be seen from the above explanation, the present invention provides a temporary blade for system migration, so that the tasks on an extracted server blade can migrate to a temporary blade, not to disrupt the ongoing client service, in the case that the extracted server blade remains out of the chassis for a predetermined time. To this end, every blade has a wireless LAN interface. In a node migration process, the source blade ID is saved in a record of the blade data management table for later reference. When a blade is inserted, another node migration process occurs if the blade ID of that blade is found in the blade data management table. At this time, the tasks on the temporary blade migrate back to the reinserted original blade. This mechanism permits ongoing client service to continue, even if the corresponding blade is mistakenly extracted by a maintenance engineer.

While the blade status management table 244d shown in FIG. 10 manages blades in a single chassis such as the one illustrated in FIG. 7, the present invention should not be limited to that example. It will also be possible to manage two or more chassis with a single blade status management table. In this case, the management blades mounted in different chassis are interconnected via an administrative network, so that one of the management blade can collect information about server blades. Such centralized blade management enables node migration to take place between different chassis. That is, a blade extracted from one chassis can be inserted to another chassis, in which case the original tasks of that blade can resume at the new slot after migrating back from the temporary slot.

### Computer-based Implementation

The management blade functions described above are implemented as computer software, the instructions being encoded and provided in the form of computer program files. A computer system executes such programs to provide the intended functions of embodiments of the present invention.

For the purpose of storage and distribution, those programs may be stored in a computer-readable storage medium. Suitable computer-readable storage media include magnetic storage media, optical discs, magneto-optical storage media, and solid state memory devices. Magnetic storage media include hard disk drives (HDD), flexible disks (FD), and magnetic tapes. Optical discs include digital versatile discs (DVD), DVD-RAM, compact disc read-only memory (CD-ROM), CD-Recordable (CD-R), and CD-Rewritable (CD-RW). Magneto-optical storage media include magneto-optical discs (MO).

Portable storage media, such as DVD and CD-ROM, are suitable for the distribution of program products. Network-based distribution of software programs is also possible, in which case several master program files are made available in a server computer for downloading to other computers via a network. A user computer stores necessary programs in its local storage unit, which have previously been installed from a portable storage media or downloaded from a server computer. The computer executes the programs read out of the local storage unit, thereby performing the programmed functions. As an alternative way of program execution, the computer may execute programs, reading out program codes directly from a portable storage medium. Another alternative method is that the user computer dynamically downloads programs from a server computer when they are demanded and executes them upon delivery.

Embodiments of the present invention propose a blade computer having a capacitor for power backup purposes. Particularly, the capacity is large enough for the CPU to operate without backplane power for a certain period. The blade computer can continue its tasks with the capacitor charge even if it is pulled out of the chassis. Since such capacitors require no particular maintenance, the use of them in blade computers does not spoil the reliability of the blade server system.

The foregoing is considered as illustrative only of the principles of the present invention, and numerous modifications and changes falling within the scope of the claimed invention will readily occur to those skilled in the art.

## Claims

1. A blade computer (230) for use in one of a plurality of slots (211 to 226) of a backplane (201), the blade computer (230) comprising:
a central processing unit (CPU)(235);
**characterised by** a capacitor (232) connected to a power line conveying power from the backplane (201), the CPU (235) operating with power supplied from at least one of the power line and the capacitor (232); and
a radio communications circuit (236) that permits the CPU (235) to communicate with other devices through a wireless channel, wherein the CPU (235) is operable to execute a node migration process using the wireless channel upon request from a remotely located blade management device (240).

2. The blade computer according to claim 1, further comprising:
an extraction detection circuit (233) that monitors connection between the blade computer (230) and the backplane (201) and asserts an extraction detection signal to indicate that the blade computer (230) has been extracted from the backplane (201); and
an operating frequency controller (116) that reduces operating frequency of the CPU (235) in response to the extraction detection signal received from the extraction detection circuit (233).

3. The blade computer according to claim 1, further comprising a capacitor charge monitor circuit (113) that monitors a current charge level of the capacitor (232) and, if the current charge level falls below a predetermined threshold, produces a suspend command signal,
wherein the CPU (235) initiates a suspend process in response to the suspend command signal received from the capacitor charge monitor circuit (113) to save memory data to a non-volatile storage medium.

4. The blade computer according to claim 1, further comprising:
an extraction detection circuit (233) that monitors connection between the blade computer (230) and the backplane (201) and asserts an extraction detection signal to indicate that the blade computer (230) has been extracted from the backplane (201); and
a power switching circuit (234) that switches the power source for the CPU (235) from the power line to the capacitor (232) in response to the extraction detection signal received from the extraction detection circuit (233).

5. The blade computer according to claim 1, further comprising:
a loudspeaker (127) for producing an audible alarm; and
an extraction detection circuit (233) that monitors connection between the blade computer (230) and the backplane (201) and asserts an extraction detection signal to indicate that the blade computer (230) has been extracted from the backplane (201);
wherein the CPU (235) causes the loudspeaker (127) to produce the audible alarm if an operating system is running when the extraction detection signal is received from the extraction detection circuit (233).

6. The blade computer according to claim 1, wherein the CPU (235) is powered from both the power line and the capacitor (232) when more power is consumed than the power line can supply.

7. The blade computer according to claim 1, further comprising a capacitor charge monitor circuit (113) that informs the CPU (235) of a current charge level of the capacitor (232), wherein the CPU (235) reduces operating frequency thereof when the current charge level reported by the capacitor charge monitor circuit (113) is below a predetermined charge level.

8. A blade management device (240) for managing blade computers (230), as claimed in any one of claims 1 to 7, installed in a plurality of slots of a backplane (201), the blade management device (240) being **characterised by**:
a radio communications circuit (245) for communicating with the blade computers (230) through a wireless channel;
an insert signal detection circuit (243) that asserts an interrupt signal when it is detected that one of the blade computers (230) has been extracted from a corresponding slot of the backplane (201); and
a central processing unit (CPU) (244) that measures time elapsed since the assertion of the interrupt signal by the insert signal detection circuit (243), and executes a node migration process using the wireless channel to transport tasks running on the extracted blade computer (230) to a temporary blade computer (230) if the extracted blade computer (230) remains dismounted until the elapsed time exceeds a predetermined reinsertion timeout period, wherein the temporary blade computer (230) is previously designated from among the plurality of blade computers (230) installed on the backplane (201).

9. The blade management device according to claim 8, wherein the CPU (244) detects reinsertion of the extracted blade computer (230) to one of the slots and executes consequently a node migration process to transport ongoing tasks of the temporary blade computer (230) back to the reinserted blade computer (230).

10. A computer-readable storage medium storing a blade management program for managing blade computers (230), as claimed in any one of claims 1 to 7, installed in a plurality of slots of a backplane (201), the blade management program causing a computer to function as:
a timer that that measures time elapsed since extraction of one of the blade computers (230) from a corresponding slot of the backplane (201);
a blade status manager that checks whether the extracted blade computer (230) is inserted again to one of the slots of the backplane (201) before the elapsed time exceeds a predetermined reinsertion timeout period; and
a node migration controller that executes a node migration process using a wireless channel to transport tasks running on the extracted blade computer (230) to a temporary blade computer (230) when the blade status manager has detected expiration of the reinsertion timeout period, wherein the temporary blade computer (230) is previously designated from among the plurality of blade computers (230) installed on the backplane (201).

## Patentansprüche

1. Ein Platinencomputer (230) zur Verwendung in einem einer Mehrzahl von Steckplätzen (211 bis 226) einer Rückwandplatine (201), wobei der Platinencomputer (230) umfasst:
einen Prozessor (CPU) (235);
**gekennzeichnet durch** einen Kondensator (232), der mit einer Stromleitung verbunden ist, die Strom von der Rückwandplatine (201) leitet, wobei die CPU (235) mit Strom arbeitet, der von mindestens einer der Stromleitung oder dem Kondensator (232) eingespeist wird; und
eine Funkverbindungsschaltung (236), welche der CPU (235) erlaubt, mit anderen Vorrichtungen über einen Funkkanal zu kommunizieren, wobei die CPU (235) betriebsfähig ist, um einen Knotenmigrationsprozess auszuführen, wobei der Funkkanal auf Anforderung von einer entfernt angeordneten Platinenverwaltungsvorrichtung (240) verwendet wird.

2. Der Platinencomputer nach Anspruch 1, des Weiteren umfassend:
eine Herauszieherkennungsschaltung (233), welche eine Verbindung zwischen dem Platinencomputer (230) und der Rückwandplatine (201) überwacht und ein Herauszieherkennungssignal aktiviert, um zu indizieren, dass der Platinencomputer (230) aus der Rückwandplatine (201) herausgezogen wurde; und
eine Betriebsfrequenzsteuerung (116), welche eine Betriebsfrequenz der CPU (235) in Antwort auf das Herauszieherkennungssignal reduziert, das von der Herauszieherkennungsschaltung (233) empfangen wird.

3. Der Platinencomputer nach Anspruch 1, des Weiteren umfassend eine Überwachungsschaltung (113) für eine Kondensatorladung, welche einen aktuellen Ladungspegel des Kondensators (232) überwacht, und, wenn der aktuelle Ladungspegel unter einen vorbestimmten Schwellenwert fällt, ein Aussetzbefehlsignal erzeugt,
wobei die CPU (235) einen Aussetzprozess in Antwort auf das Aussetzbefehlsignal initiiert, welches von der Überwachungsschaltung (113) für eine Kondensatorladung empfangen wird, um Speicherdaten auf einem nicht flüchtigen Speichermedium zu sichern.

4. Der Platinencomputer nach Anspruch 1, des Weiteren umfassend:
eine Herauszieherkennungsschaltung (233), welche eine Verbindung zwischen dem Platinencomputer (230) und der Rückwandplatine (201) überwacht und ein Herauszieherkennungssignal aktiviert, um zu indizieren, dass der Platinencomputer (230) aus der Rückwandplatine (201) herausgezogen wurde; und
einen Stromschaltkreis (234), welcher die Stromquelle für die CPU (235) von der Stromleitung auf den Kondensator (232) umschaltet, in Antwort auf das Herauszieherkennungssignal, das von der Herauszieherkennungsschaltung (233) empfangen wird.

5. Der Platinencomputer nach Anspruch 1, des weiteren umfassend:
einen Lautsprecher (127) zum Erzeugen eines akustischen Alarms; und
eine Herauszieherkennungsschaltung (233), welche eine Verbindung zwischen dem Platinencomputer (230) und der Rückwandplatine (201) überwacht und ein Herauszieherkennungssignal aktiviert, um zu indizieren, dass der Platinencomputer (230) aus der Rückwandplatine (201) herausgezogen wurde;
wobei die CPU (235) den Lautsprecher (127) veranlasst den akustischen Alarm zu erzeugen, falls ein Betriebssystem läuft, wenn das Herauszieherkennungssignal von der Herauszieherkennungsschaltung (233) empfangen wird.

6. Der Platinencomputer nach Anspruch 1, wobei die CPU (235) sowohl von der Stromleitung als auch dem Kondensator (232) mit Strom versorgt wird, wenn mehr Strom verbraucht wird als die Stromleitung bereitstellen kann.

7. Der Platinencomputer nach Anspruch 1, des Weiteren umfassend eine Überwachungsschaltung (113) für eine Kondensatorladung, welche die CPU (235) über einen aktuellen Ladungspegel des Kondensators (232) informiert, wobei die CPU (235) ihre Betriebsfrequenz reduziert, wenn der aktuelle Ladungspegel, der durch die Überwachungsschaltung (113) für eine Kondensatorladung gemeldet wird, unter einem vorbestimmten Ladungspegel liegt.

8. Eine Platinenverwaltungsvorrichtung (240) zum verwalten von Platinencomputern (230) nach einem der Ansprüche 1 bis 7, welche in einer Mehrzahl von Steckplätzen einer Rückwandplatine (201) installiert sind, wobei die Platinenverwaltungsvorrichtung (240) **gekennzeichnet ist durch**:
eine Funkverbindungsschaltung (245) zum Kommunizieren mit den Platinencomputern (230) über einen Funkkanal;
eine Erkennungsschaltung (243) für ein Einsetzsignal, welche ein Unterbrechungssignal aktiviert, wenn erkannt wird, dass einer der Platinencomputer (230) aus einem entsprechenden Steckplatz der Rückwandplatine (201) herausgezogen wurde; und
einen Prozessor (CPU) (244), welcher eine Zeit misst, die seit dem Aktivieren des Unterbrechungssignals **durch** die Erkennungsschaltung (243) für ein Einsetzsignal abgelaufen ist, und welcher einen Knotenmigrationsprozess ausführt, wobei der Funkkanal verwendet wird, um Prozesse, die auf dem herausgezogenen Platinencomputer (230) laufen, zu einem temporären Platinencomputer (230) zu transportieren, wenn der herausgezogene Platinencomputer (230) ausgebaut bleibt, bis die abgelaufene zeit eine vorbestimmte Zeitüberschreitungsperiode zum Wiedereinsetzen überschreitet, wobei der temporäre Platinencomputer (230) vorher aus der Mehrzahl von Platinencomputern (230) heraus bestimmt wird, die an der Rückwandplatine (201) installiert ist.

9. Die Platinenverwaltungsvorrichtung nach Anspruch 8, wobei die CPU (244) ein Wiedereinsetzen des herausgezogenen Platinencomputers (230) in einen der Steckplätze erkennt und infolgedessen einen Knotenmigrationsprozess ausführt, um laufende Prozesse des temporären Platinencomputers (230) zurück zu dem wieder eingesetzten Platinencomputer (230) zu transportieren.

10. Ein computerlesbares Speichermedium, welches ein Platinenverwaltungsprogramm speichert zum Verwalten von Platinencomputern (230) nach einem der Ansprüche 1 bis 7, welche in einer Mehrzahl von Steckplätzen einer Rückwandplatine (201) installiert sind, wobei das Platinenverwaltungsprogramm einen Computer veranlasst, um zu arbeiten als:
ein Timer, welcher eine Zeit misst, die seit einem Herausziehen eines der Platinencomputer (230) aus einem entsprechenden Steckplatz der Rückwandplatine (201) abgelaufen ist;
ein Platinenzustandsverwalter, der überprüft, ob der herausgezogene Platinencomputer (230) erneut in einen der Steckplätze der Rückwandplatine (201) eingesetzt wird, bevor die abgelaufene Zeit eine vorbestimmte Zeitüberschreitungsperiode zum Wiedereinsetzen überschreitet; und
eine Knotenmigrationssteuerung, welche einen Knotenmigrationsprozess ausführt, wobei ein Funkkanal verwendet wird, um Prozesse, welche auf dem herausgezogenen Platinencomputer (230) laufen, zu einem temporären Platinencomputer (230) zu transportieren, wenn der Platinenzustandsverwalter ein Ablaufen der Zeitüberschreitungsperiode zum Wiedereinsetzen erkannt hat, wobei der temporäre Platinencomputer (230) vorher aus der Mehrzahl von Platinencomputern (230) heraus bestimmt wird, die an der Rückwandplatine (201) installiert ist.

## Revendications

1. Ordinateur lame (230) pour une utilisation dans un emplacement parmi une pluralité d'emplacements (211 à 226) d'un fond de panier (201), l'ordinateur lame (230) comprenant :
une unité de traitement centrale (UC) (235),
**caractérisé par** un condensateur (232) connecté à une ligne d'alimentation transportant l'alimentation à partir du fond de panier (201), l'unité UC (235) fonctionnant avec l'alimentation fournie depuis au moins un élément parmi la ligne d'alimentation et le condensateur (232), et
un circuit de communications radio (236) qui permet à l'unité UC (235) de communiquer avec d'autres dispositifs par l'intermédiaire d'un canal sans fil, où l'unité UC (235) peut être mise en oeuvre pour exécuter un traitement de migration de noeud en utilisant le canal sans fil lors d'une demande provenant d'un dispositif de gestion de lames situé à distance (240).

2. Ordinateur lame selon la revendication 1, comprenant en outre :
un circuit de détection d'extraction (233) qui surveille une connexion entre l'ordinateur lame (230) et le fond de panier (201) et excite un signal de détection d'extraction pour indiquer que l'ordinateur lame (230) a été extrait du fond de panier (201), et
un contrôleur de fréquence de fonctionnement (116) qui réduit la fréquence de fonctionnement de l'unité UC (235) en réponse au signal de détection d'extraction reçu du circuit de détection d'extraction (233).

3. Ordinateur lame selon la revendication 1, comprenant en outre un circuit de surveillance de charge de condensateur (113) qui surveille un niveau de charge actuel du condensateur (232) et, si le niveau de charge actuel chute au-dessous d'un seuil prédéterminé, produit un signal d'instruction de suspension,
où l'unité UC (235) initie un traitement de suspension en réponse au signal d'instruction de suspension reçu du circuit de surveillance de charge de condensateur (113) pour sauvegarder des données de mémoire dans un support de mémorisation non volatile.

4. Ordinateur lame selon la revendication 1, comprenant en outre :
un circuit de détection d'extraction (233) qui surveille une connexion entre l'ordinateur lame (230) et le fond de panier (201) et excite un signal de détection d'extraction pour indiquer que l'ordinateur lame (230) a été extrait du fond de panier (201), et
un circuit de commutation d'alimentation (234) qui bascule la source d'alimentation pour l'unité UC (235) de la ligne d'alimentation au condensateur (232) en réponse au signal de détection d'extraction reçu du circuit de détection d'extraction (233).

5. Ordinateur lame selon la revendication 1, comprenant en outre :
un haut-parleur (127) destiné à produire une alarme audible, et
un circuit de détection d'extraction (233) qui surveille une connexion entre l'ordinateur lame (230) et le fond de panier (201) et excite un signal de détection d'extraction pour indiquer que l'ordinateur lame (230) a été extrait du fond de panier (201),
où l'unité UC (235) amène le haut-parleur (127) à produire une alarme audible si un système d'exploitation est en cours d'exécution lorsque le signal de détection d'extraction est reçu du circuit de détection d'extraction (233).

6. Ordinateur lame selon la revendication 1, dans lequel l'unité UC (235) est alimenté à la fois par la ligne d'alimentation et le condensateur (232) lorsque davantage de puissance est consommée que la ligne d'alimentation ne peut en fournir.

7. Ordinateur lame selon la revendication 1, comprenant en outre un circuit de surveillance de charge de condensateur (113) qui informe l'unité UC (235) d'un niveau de charge actuel du condensateur (232), où l'unité UC (235) réduit sa fréquence de fonctionnement lorsque le niveau de charge en cours signalé par le circuit de surveillance de charge de condensateur (113) est en dessous d'un niveau de charge prédéterminé.

8. Dispositif de gestion de lames (240) destiné à gérer des ordinateurs lames (230), selon l'une quelconque des revendications 1 à 7, installés dans une pluralité d'emplacements d'un fond de panier (201), le dispositif de gestion de lames (240) étant **caractérisé par** :
un circuit de communications radio (245) destiné à communiquer avec les ordinateurs lames (230) par l'intermédiaire d'un canal sans fil,
un circuit de détection de signal d'insertion (243) qui excite un signal d'interruption lorsqu'il est détecté que l'un des ordinateurs lames (230) a été extrait d'un emplacement correspondant du fond de panier (201), et
une unité centrale UC (244) qui mesure le temps qui écoulé depuis l'excitation du signal d'interruption par le circuit de détection de signal d'insertion (243), et exécute un traitement de migration de noeud en utilisant le canal sans fil pour transporter les tâches s'exécutant sur l'ordinateur lame extrait (230) vers un ordinateur lame temporaire (230) si l'ordinateur lame extrait (230) reste démonté jusqu'à ce que le temps écoulé dépasse une période de temps imparti de réinsertion prédéterminée, où l'ordinateur lame temporaire (230) est désigné au préalable à partir de la pluralité d'ordinateurs lames (230) installés sur le fond de panier (201).

9. Dispositif de gestion de lames selon la revendication 8, dans lequel l'unité UC (244) détecte la réinsertion de l'ordinateur lame extrait (230) dans l'un des emplacements et exécute en conséquence un traitement de migration de noeud pour transporter les tâches en cours de l'ordinateur lame temporaire (230) en retour vers l'ordinateur lame réinséré (230).

10. Support de mémorisation lisible par un ordinateur mémorisant un programme de gestion de lames destiné à gérer des ordinateurs lames (230), selon l'une quelconque des revendications 1 à 7, installés dans une pluralité d'emplacements d'un fond de panier (201), le programme de gestion de lames amenant un ordinateur à fonctionner en tant que :
temporisateur qui mesure le temps écoulé depuis l'extraction de l'un des ordinateurs lames (230) d'un emplacement correspondant du fond de panier (201),
gestionnaire d'état de lame qui contrôle si l'ordinateur lame extrait (230) est à nouveau inséré dans l'un des emplacements du fond de panier (201) avant que le temps écoulé ne dépasse une période de temps imparti de réinsertion prédéterminée, et
contrôleur de migration de noeud qui exécute un traitement de migration de noeud en utilisant un canal sans fil pour transporter des tâches s'exécutant sur l'ordinateur lame extrait (230) vers un ordinateur lame temporaire (230) lorsque le gestionnaire d'état de lame a détecté l'expiration de la période de temps imparti de réinsertion, où l'ordinateur lame temporaire (230) est désigné au préalable à partir de la pluralité d'ordinateurs lames (230) installés sur le fond de panier (201).
